Europäisches Patentamt

European Patent Office

Office européen des brevets

(19)

(11) Publication number: **0 126 622**
A2

# EUROPEAN PATENT APPLICATION

(21) Application number: 84303329.1

(22) Date of filing: 16.05.84

(51) Int. Cl.³: **G 03 H 1/26**

(30) Priority: 19.05.83 GB 8313918

(71) Applicant: **New Holographic Design Limited, 133 Notting Hill Gate, London (GB)**
Applicant: **Hart, Stephen John, 42 Midship Point Malabar Street, London (GB)**
Applicant: **Dalton, Michael Nicholas, 22, Ifield Road, London (GB)**

(43) Date of publication of application: 28.11.84
**Bulletin 84/48**

(72) Inventor: **Hart, Stephen John, 42 Midship Point Malabar Street, London (GB)**
Inventor: **Dalton, Michael Nicholas, 22, Ifield Road, London (GB)**
Inventor: **Waller-Bridge, Michael, 7 Haarlem Road, London (GB)**
Inventor: **Bazargan, Kaveh, 8 Buckingham Court Kensington Park Road, London (GB)**

(84) Designated Contracting States: **AT BE CH DE FR GB IT LI LU NL SE**

(74) Representative: **Sturt, Clifford Mark et al, MARKS & CLERK 57-60 Lincoln's Inn Fields, London WC2A 3LS (GB)**

(54) Improvements in or relating to holography.

(57) The present invention relates to a method and apparatus for the production of holograms.

The invention resides in the multiplexing of a sequence of interference patterns formed by using a display device (16), controlled by data representative of a plurality of two dimensional representations of information, to modulate radiation with regulation of the relative spacing between representations (16) and the holographic recording medium (18).

Description is given of extensions of the invention so as to provide for grey scaling, colouring and half toning of the hologram (18).

ACTORUM AG

1

# IMPROVEMENTS IN OR RELATING TO HOLOGRAPHY

The present invention relates to the production of holograms.

It has previously been proposed that holograms may be produced by sequentially exposing a photographic plate to interference patterns produced between a reference beam and an illuminating beam reflected in turn from a series of two-dimensional pictures. The series of two-dimensional pictures are a set of photographs showing different views of a three-dimensional object. The two-dimensional pictures are presented for illumination in a spatial distribution with respect to the photographic plate corresponding to the distribution used for their production with respect to the three-dimensional object.

Such use of photographs to form a hologram incurs disadvantages but may be necessitated by the three-dimensional object being other than directly accessible. For example, the photographs may represent a series of two-dimensional pictures generated by an X-ray tomography system. This technique is susceptible

0126622

2

to degredation of the final hologram due to loss of information in forming the photographs and imprecise positioning of the photographs when forming the hologram. The technique is also inconvenient since it necessitates an intermediate photographic stage, for example the photographing of two dimensional images from a visual display screen.

With a view to mitigating at least some of these disadvantages the present invention provides, in a first aspect, a method of producing a hologram, comprising:

controlling display means by data representative of a plurality of two dimensional representation of information so as to form in a predetermined sequence each of the representations, and for each representation:

regulating the relative spacing between the representation and a recording medium in accordance with a predetermined spatial relationship between the representations:

modulating radiation by directing the radiation onto the representation:

generating an interference pattern by causing the modulation radiation to interfere with reference radiation, and

recording the interference pattern on the recording medium.

3

According to a second aspect of the present invention there is provided apparatus for producing a hologram, comprising:

display means controlled by data representative of a plurality of two dimensional representations of information to form in a predetermined sequence each of the two dimensional representations so as to modulate incident radiation by each of the representations,

a radiation source which provides the radiation to be modulated by the representations and reference radiation which interferes with the said modulated radiation to form interference patterns,

a recording medium which records the interference patterns to form the hologram, and

positioning means which regulate the relative spacing between each two dimensional representation and the recording medium at the time the representation produces the said modulation in accordance with a predetermined spatial relationship between the representations.

The two dimensional representations, formed using radiation from the radiation emitting device, may contain deliberate distortion.

4

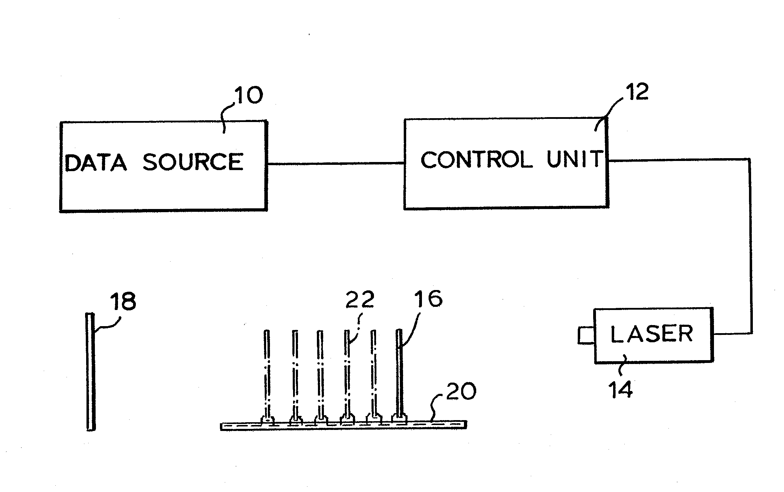

Embodiments of the invention will now be described by way of example only and with reference to the single figure of the accompanying drawings which is a schematic illustration of a method and apparatus in accordance with this invention.

The drawing shows a data source 10 connected to a control unit 12 which controls movement of plates 16 and 18, controls a laser beam from laser 14 and controls communication with the data source 10. The laser 14 can illuminate a photochromic plate 16 so as to produce an image. The image produced on plate 16 is a two dimensional representation of information and is used to generate an interference pattern to be recorded on plate 18 which will eventually form the hologram. The plate 16 is moveable along the bed 20.

It will be appreciated that various components of one or more optical systems would be used with the arrangement shown in the drawing. In simplest form, a beam splitter would be required to produce the reference beam. It should be noted that separate lasers could be used for producing the image on plate 16 and for producing the modulated and reference beams.

The data source 10 provides digital or analogue data relating to a sequence of two-dimensional representations of information. The information may relate to more than two dimensions and the representation may conveniently be referred to as slices. The data may have been generated and stored by any suitable system. Representative examples of such systems are X-ray tomography, photon counting imaging in astronomy, "three dimensional microscopy" (also known as "optical sectioning microscopy") and wireframe modelling in CAD/CAM. In all of these examples the object to be reconstructed using the final hologram is inaccessible or non-existant. The data produced in these example systems, that is the data from data source 10, represents a sequence of slices with each slice embodying a unique spatial relationship within the sequence.

The two dimensional representations may embody information in any form including pixel or vector forms. The representations need not be flat nor perpendicular to the plate 18 or laser 14

A control unit 12 interfaces the data source 10 with a laser 14 and also controls the relative position of laser 14 and plates 16 and 18. The control unit 12 can access information from data source 10 relating to a single slice and causes the laser 14 to scan across plate 16 creating an image on the plate 16.

Plate 16 is photochromic and, as the laser scans the plate, the data from data source 10 can simply control the output intensity of laser 14 thus providing the required image.

The spatial location of plate 16 with respect to plate 18 is determined in accordance with a predetermined spatial relationship of the slice with respect to the three-dimensional pattern required in the hologram. In a simple system the spatial location of plate 16 with respect to plate 18 may be set by manually moving the plate 16 along bed 20. In more advanced systems movement of plate 16 may be controlled directly by control unit 12, possibly by using data from the data source 10, and other than purely linear movement between plates 16 and 18 can be achieved.

Once an image has been established on plate 16 the plate is illuminated with radiation which is modulated by the plate. The modulated radiation is directed towards plate 18. It is envisaged that modulation could result from either transmission or reflection with respect to plate 16. When using a reflection technique, it may be preferable to use a partly silvered mirror in producing the modulated beam.

Each image can be directed, if desired, by an optical system into the vicinity of plate 18. This could be used to produce image-plane holograms.

Reference radiation is also directed towards plate 18, possibly using an auxiliary optical system, so that the reference and modulated radiation interfere to produce an interference pattern which may be recorded on plate 18. Plate 16 is moved to the correct position for another slice and laser 14 scans plate 16 so as to establish another slice. An interference pattern is again generated and recorded on plate 18. This process is completed for each of the slices. It should be appreciated that the predetermined sequence in which the slices are processed need not be the sequence in which they are available from the data source 10. Plate 18 is then treated so as to permanently record the sequence of interference patterns.

The plate 16 has been described as being photochromic but other variants are possible. It is highly desirable that plate 16 should provide an image which decays within a relatively short time period or should produce a picture which is erasable in a relatively quick fashion. It is also preferred that the spatial relationship between plates 16 and 18 is controlled by the control unit 12 using data from data source 10.

The radiation emitting device controlled by unit 12 need not be a laser.

8

A passive display such as an LCD array may be used in place of the photochromic plate 16. The use of a device such as a cathode ray tube is not, however, considered suitable since its dynamic nature would not permit an interference pattern to be formed.

With a suitably refined system it may be possible for the laser 14 both to produce the image on plate 16 and then to illuminate the plate 16 and provide the reference beam so as to generate the interference pattern for plate 18. This could be achieved by focusing the laser 14 into a narrow beam for scanning plate 16 and then enlarging the cross-sectional area of the beam emitted by laser 14 so as to illuminate the whole of plate 16. After the plate 16 has been scanned the laser 14 would illuminate the whole of plate 16, before the picture decays or before the picture is erased. Suitable apparatus for producing the reference beam, such as a beam splitter and apparatus for shielding plate 18 may be introduced into the system and operated at the appropriate times.

0126622

9

The foregoing description has dicussed the formation of a three dimensional hologram by multiplexing together a sequence of two dimensional images. The result is a single holographic emulsion containing many separate holograms, each of which is a hologram of one particular two dimensional image at one particular distance from the emulsion. This multiplexing technique is used therefore to provide depth in the final three dimensional image.

It has been discovered that the light from two volume-elements (herein referred to as "volules") in such a hologram can combine to give a brighter image as compared with the light from either volule alone. Thus if one looks at a line of such volules end on, the single point one sees (the line end in effect) is much brighter than each volule separately - each volule is totally transparent so light from those at the back of the line shines through to the front.

The additive effect is found to exist even if the two volules occupy the same volume in the hologram. If two-dimensional slices are multiplexed together at the same distance from the emulsion (plate 18) then those light points common to the two images will combine to be brighter than points that are only light in one image or the other.

The consequence of the discovery is that grey-scale and colour holograms can be produced by extension of the above described multiplexing technique.

To achieve an N-level grey scaled hologram from a binary (ie, on or off) display device, such as the above described LCD panel, one must multiplex N holograms at each distance. A volule which is to have a brightness of one unit will be bright in the one exposure only; for a brightness of two units the relevant point would be bright in any two of the exposures, and so on up to N.

The problem with this method is that there is a practical limit to how many exposures can be multiplexed into one emulsion. Thus, adding a grey scale in this manner can be expected to reduce the number of different 'depths' that can be combined together. One solution to the problem is to combine as many slices as possible into one emulsion and then to use several separate emulsions to cover different volumes of the intended final hologram. That is, to produce several separate holograms which are then holographically combined into a final hologram. This can permit very many holograms to be combined.

Another technique for dealing with the practical limit of the total number of holograms held in the final emulsion is predicated upon the fact that not all two dimensional slices of a three dimensional object having N grey levels will contain all N levels: many may not contain any bright points at a particular one of the N levels. Clearly there is no need to include images which would be blank because they contain no points as bright as the grey level being added in. Similarly, if all points in an image are to be of unit brightness or three units brightness then rather than recording the image in the hologram with three exposures each with eq ual unit brightness, the image can be recorded with two exposures in which one is twice as bright as the other.

The trend of development is such that it will soon be practical to use a display device that does itself have a grey scale - in place of plate 16. The described technique can still be used to extend the grey scale.

12

Thus 8 exposures of a 16 level display device (probably the practical limit for LCD panels in the near future) can be added to produce a 128 grey scale image (16 x 8).

With a display device having a greater XY resolution than simply required to show a two dimensional slice in full detail, the extra resolution can be used to produce a "half tone" image. The image is built up in a pointillist manner from many small dots. These dots are centred on a regular XY grid but have different sizes. A closely packed field of tiny dots appear grey because they cover little of the available area. Increasing the dot size darkens the percieved tone. Such half toning works because the image is viewed from a distance so that the separate dots are not visible.

This technique can be used with a display device such as an LCD panel in order to produce a half tone image. Each image point must be assigned to a group of display pixels and the required grey level is produced by lighting only a portion of the pixels in each group.

If spare XY resolution and a grey scale are present in a display device, it is clearly possible to use half toning to increase the number of grey levels.

Grey scales can thus be achieved in holograms by any combination of multiplexed-multiple exposures, half toning, and any inherent grey scale ability of the display panel. However, one is not limited to XY half toning because it is also possible to use the Z resolution, that is the holographic depth. Thus given the ability to produce a hologram containing a greater number of depths than required for a particular object, this extra Z resolution can be used for half toning just as one can use extra XY resolution.

A colour hologram can be obtained in much the same way as a grey scale hologram. If the display device cannot produce a colour image (from which a direct colour hologram could be produced) or if the colour scale is too limited then several exposures each of a different colour may be combined to achieve the required result. Thus a volule that is bright in each of three separate red/green/blue exposures multiplexed together will appear white since light from the three coloured interference patterns will be added together.

14

Again, excess X, Y or Z resolution can be used, if required, so that the red, green and blue components of a point need not overlap. Unnecessary exposures can be avoided by omitting those for which no point has a colour component of the colour being exposed.

The techniques for colour and for grey scaling can be combined to form colour images with a range of tones.

The methods outlined above for colour and/or grey scale all depend on the hologram being formed by two or more separate exposures. As described above, the separation is temporal. But spatial separation is also possible. To do this would require two or more display panels operated in synchronisation, each displaying a separate image, and combined together optically onto the holographic emulsion. The required separation may be achieved by a combination of temporal or spatial multiplexing

15

Description has been given as to how the discovery that light from separate volules in a hologram combine together to produce a brighter point can be used to produce colour and grey scale holograms. However, in some circumstances the brightening effect may be a nuisance.

Consider a line formed from several volules. When looked at edge on the line will appear as bright as each separate volule. But end on the light from the constituent volules will combine to form a brighter point. Such behaviour is not normal for real objects and may be disconcerting for the viewer.

In a complex hologram there will be many lines each having different directions. As the viewer moves around the hologram there will usually be a few lines seen end on and these will appear too bright. These bright points will appear and disappear as the viewer's point of observation moves and this may (or may not) be distracting.

This phenomenon can be overcome by introducing "dither", that is moving of an image point from where it should be to some close neighbouring position. This is applied to all points in the line but each one point is displaced in a semi-random fashion. The end result is that the line is broadened and more diffuse but its overall direction is maintained.

16

Points can be displaced in the X,Y and Z directions in such a way as to minimise the number of volules that line up when the line is viewed from any direction, especially end on.  As an example, if each point is displaced by up to one volule in X and /or Y directions then the line will be twice as broad (a disadvantage) but when seen end on the area will have quadrupled so that the increase in brightness will have been quartered (the intended advantage).

The same idea can be extended from lines to surfaces, and volumes can be produced by showing (with dither) their enclosing surfaces.

Colour, grey scaling and deliberate dither may all be combined as required.

1

## Claims

1. Apparatus for producing a hologram, comprising:

display means (16) controlled by data representative of a plurality of two dimensional representations of information to form in a predetermined sequence each of the two dimensional representations so as to modulate incident radiation by each of the representations,

a radiation source (14) which provides the radiation to be modulated by the representations and reference radiation which interferes with the said modulated radiation to form interference patterns,

a recording medium (18) which records the interference patterns to form the hologram, and

positioning means (20) which regulate the relative spacing between each two dimensional representation and the recording medium (18) at the time the representation produces the said modulation in accordance with a predetermined spatial relationship between the representations.

2. Apparatus as claimed in claim 1, characterised in that the display means (16) comprises a liquid crystal display panel.

3. Apparatus as claimed in claim 1, characterised in that the display means (16) comprises a photochromic plate.

4. Apparatus as claimed in claim 1, characterised in that the radiation source also scans the display panel (16) so as to establish each representation prior to radiation modulation.

5. Apparatus as claimed in claim 1, characterised by data storage means (10) which store the said data and which include data processing means capable of processing the said data to alter the representations and/or the predetermined sequence.

6. Apparatus as claimed in claim 5, characterised in that the positioning means (20) include automatic adjustment means which adjust the said relative spacing under control of data stored in the data storage means (10).

7. Apparatus as claimed in claim 1, characterised in that the display means (16) comprises two or more display panels operated in synchronisation so as to record more than one interference pattern simultaneously.

8. A method of producing a hologram on a recording medium, comprising:

controlling display means (16) by data representative of a plurality of two dimensional representation of information so as to form in a predetermined sequence each of the representations, and for each representation;

regulating the relative spacing between the representation and the recording medium (18) in accordance with a predetermined spatial relationship between the representations;

modulating radiation by directing the radiation onto the representation;

generating an interference pattern by causing the modulation radiation to interfere with reference radiation, and

recording the interference pattern on the recording medium.

9. A method as claimed in claim 8, characterised by the step, for each representation, of scanning the display means (16) to establish the representation prior to modulating the said radiation.

0126622

4

10. A method as claimed in claim 8 characterised by the step of controlling the display means (16) to form a number of additional representations at each relative spacing of representation and recording medium, (18) and recording an interference pattern from each of the additional representations, whereby the hologram is provided with grey scaling.

11. A method as claimed in claim 10, characterised in that at least one additional representation is subject to radiation to be modulated which is of a different intensity to that used for the first representation at that relative spacing.

12. A method as claimed in claim 10, characterised by the step of forming each additional representation using pixels within the display means in groups to achieve half toning.

13. A method as claimed in claim 10 characterised by the step of using radiation of different wavelengths for the additional representations, whereby a colour hologram is produced.

14. A method as claimed in claim 13, characterised by the step of using radiation of different wavelengths for groups of additional representations, whereby a hologram having

a range of tones of colour is produced.

15. A method as claimed in claim 8, characterised by the step of forming extra representations, modulating radiation, generating an interference pattern and recording the pattern using a relative spacing such as to provide half toning of the hologram using its depth resolution.

16. A method as claimed in claim 10, characterised in that each additional representation is distorted so as to avoid undesired brightening of points in the hologram.